# EUROPÄISCHE PATENTSCHRIFT

(11) **EP 0 561 826 B1**
(45) Veröffentlichungstag und Bekanntmachung des Hinweises auf die Patenterteilung: **10.08.1994**
(21) Anmeldenummer: 91920524.5
(22) Anmeldetag: 26.11.1991
(51) Int. Cl.: B62D 25/08, B62D 29/00, B62D 27/06, B62D 25/16

(54) **FAHRZEUGKAROSSERIE FÜR EINEN PERSONENKRAFWAGEN**
VEHICLE BODYWORK FOR A PASSENGER CAR
CARROSSERIE POUR VOITURE DE TOURISME

(30) Priorität: 20.12.1990 DE 4040951
(43) Veröffentlichungstag der Anmeldung: 29.09.1993
(73) Patentinhaber: AUDI AG, 85002 Ingolstadt (DE)
(72) Erfinder: KLAGES, Ulrich, D-8070 Ingolstadt (DE); FELDSCHMID, Alois, D-8070 Ingolstadt (DE); KREIS, Gundolf, D-8072 Oberstimm (DE); TIMM, Heinrich, D-8070 Ingolstadt (DE)
(74) Vertreter: Engelhardt, Harald
(86) Internationale Anmeldenummer: EP9102230
(87) Internationale Veröffentlichungsnummer: WO9211161

(56) Entgegenhaltungen:
- DE-A- 2 713 604
- DE-A- 3 077 760
- US-A- 4 826 238
- PATENT ABSTRACTS OF JAPAN, Band 14, Nr. 440 (M-102), 20. September 1990
- PATENT ABSTRACTS OF JAPAN, Band 7, Nr. 153 (M-226)(1298), 5. Juli 1983

## Beschreibung

Die Erfindung betrifft eine Personenwagenkarosserie nach dem Oberbegriff des Anspruchs 1.

Übliche selbsttragende Personenwagenkarosserien sind, einschließlich der Tragstruktur, aus Belchteilen hergestellt. Für eine Befestigung eines Kotflügels ist es bekannt, eine von einem mittleren Bereich eines Pfosten A zur Vorderseite des Fahrzeugs weisende Kotflügelbank anzubringen. Eine solche Kotflügelbank besteht üblicherweise aus zwei tiefgezogenen und miteinander verbundenen Blechen, die einen geschlossenen, aber im Längsverlauf nicht konstanten Querschnitt bilden und in den meisten Fällen im vorderen Bereich nur aus einem abgekanteten Blech bestehen.

Die zum Aufbau solcher Karosserien verwendeten Stahlbleche, werden im Tiefziehverfahren verformt. Die Preßwerkzeuge zum Verformen der Bleche sind verhältnismäßig teuer, lassen jedoch sehr hohe Stückzahlen zu, so daß für eine Großserienfertigung damit eine kostengünstige Lösung zur Verfügung steht. Aufgrund der hohen Werkzeuginvestitionen gestaltet sich das beschriebene Verfahren für Kleinserien jedoch sehr kostenintensiv. Zudem ist die bekannte Ausführung einer Kotflügelbank mit Blechteilen hinsichtlich der Steifigkeit und des Crashverhaltens verbesserungsfähig.

Es ist daher insbesondere für Kleinserien bekannt (EP 0 146 716 B1), Fahrzeugkarosserien für Personenkraftwagen mit einer Tragstruktur aus Hohlprofilen herzustellen, welche durch Knotenelemente miteinander verbunden sind. Die Hohlprofile sind dabei als Leichtmetall-Strangprofile und die Knotenelemente als Leichtmetall-Gußteile ausgebildet.

Ein Knotenelement liegt bei einer solchen Ausführung am Pfosten A zwischen einem vorderen Dachpfosten und einem vorderen Türpfosten. Dieses Knotenelement nimmt jeweils mit einem Ende den vorderen Dachpfosten und den vorderen Türpfosten sowie einen vorderen Querträger und eine zur Fahrzeugfrontseite weisende Kotflügelbank auf. Der vordere Dachpfosten, der vordere Türpfosten, der vordere Querträger und die Kotflügelbank sind als Leichtmetall-Strangprofile ausgeführt.

Die Kotflügelbank hat jedoch hier lediglich einen einfachen, etwa quadratischen Querschnitt. Ein Radhaus mit Federbeinaufnahme ist als Schweißgruppe von Blechteilen mit dem vorderen Türpfosten und mit der Kotflügelbank verbunden.

In Verbindung mit einer herkömmlichen Blechkarosserie ohne Leichtmetall-Strangprofile ist es bekannt (JP-A-2 175 385), eine Kotflügelbank, zumindest in einem Teil des zur Fahrzeugaußenseite hin liegenden Profilquerschnitts der Querschnittsform eines damit verbundenen Kotflügels anzupassen, dergestalt, daß der Profilquerschnitt der Kotflügelbank L-förmig ist. Dazu ist ein erster, etwa waagrecht zur Fahrzeugmitte hin liegender, rechteckiger Hohlkammerbereich als waagrechter L-Schenkel mit einem zweiten, etwa senkrecht stehenden Hohlkammerbereich als senkrechtem L-Schenkel verbunden.

Aufgabe der Erfindung ist es, eine gattungsgemäße Tragstruktur einer Personenwagenkarosserie im Bereich der Kotflügelbank so weiterzubilden, daß bei einer verbesserten Raumausnützung eine Verbesserung der Steifigkeit erreicht wird.

Diese Aufgabe wird mit den kennzeichnenden Merkmalen des Anspruchs 1 gelöst.

Gemäß Anspruch 1 ist die Kotflügelbank durch die beanspruchte L-Struktur mit ihrem Profilquerschnitt der Querschnittsform eines damit verbundenen Kotflügels angepaßt. Damit wird der Raum unterhalb des Kotflügels für eine Querschnittsvergrößerung des stranggepreßten Kotflügelbankprofils und somit für eine Steifigkeitserhöhung genutzt. Zudem ist weiter ein Radhausträger als Leichtmetall-Strangprofil jeweils in einem Abstand zum Knotenelement zwischen der Kotflügelbank und dem vorderen Türpfosten angebracht, wobei die Länge des Radhausträgers und sein schräger Verlauf so dimensioniert sind, daß der maximal zur Verfügung stehende Raum zu einem Fahrzeugreifen hin ausgenützt ist, um eine möglichst breite Basis für eine Abstützung zu erhalten. Der Radhausträger ist mit seinen Endseiten mit der Kotflügelbank und dem Türpfosten fest verbunden, so daß ein stabiler, dreieckiger Trägerverbund als Stützdreieck gebildet ist. Die Kotflügelbank ist dadurch nach unten zum Türpfosten hin abgestützt, wobei im Falle eines Frontaufpralls eine günstige Krafteinleitung und Verteilung der Aufprallenergie erreicht wird.

Nach Anspruch 2 ergibt sich mit einer solchen Profilausbildung eine günstige Anordnung und Befestigungsmöglichkeit für einen Kotflügel, wobei dieser an der Oberseite des ersten Hohlkammerbereichs mit einem Randflansch anliegt und dort mit Schrauben verbunden ist. Der Kotflügel folgt dann anschließend an den Randbereich mit seiner Querschnittskontur der Gestalt des zweiten Hohlkammerbereichs. Dabei wird der Raum unter dem Kotflügel optimal für die Gestalt des Kotflügelbankprofils ausgenützt. Zudem ist ein Winkelbereich oberhalb des ersten Hohlkammerbereichs gebildet, in den eine Motorhaube mit ihrem Rand und entsprechend ihrer Stärke bündig zur Außenkontur des Kotflügels einbringbar ist.

Um die Steifigkeit der Kotflügelbank noch zu erhöhen, kann es je nach den Gegebenheiten gemäß Anspruch 3 vorteilhaft sein, die Kotflügelbank als Mehrkammer-Hohlprofil auszubilden, wobei die Hohlkammerbereiche durch Stege getrennt sind. Stabilitätsanpassungen sind auch über unterschiedliche Wandstärken möglich.

Gemäß Anspruch 4 hat sich als zweckmäßig ein etwa quadratischer Profilquerschnitt erwiesen, wobei die Breite des Profils auf die Breite der Kotflügelbank und des Türpfostens abgestimmt ist.

Anhand einer Zeichnung wird ein Ausführungsbeispiel der Erfindung mit weiteren Einzelheiten, Merkmalen und Vorteilen näher erläutert.

Es zeigen
- Fig. 1: eine schematische Seitenansicht der Tragstruktur im vorderen Bereich der Karosserie eines Personenkraftwagens mit einem Türpfosten, einer Kotflügelbank, einem Knotenelement, einem Radhausträger und einem Reifen und
- Fig. 2: einen Querschnitt durch eine Kotflügelbank mit angeschraubtem Kotflügel und einem Randbereich einer Motorhaube.

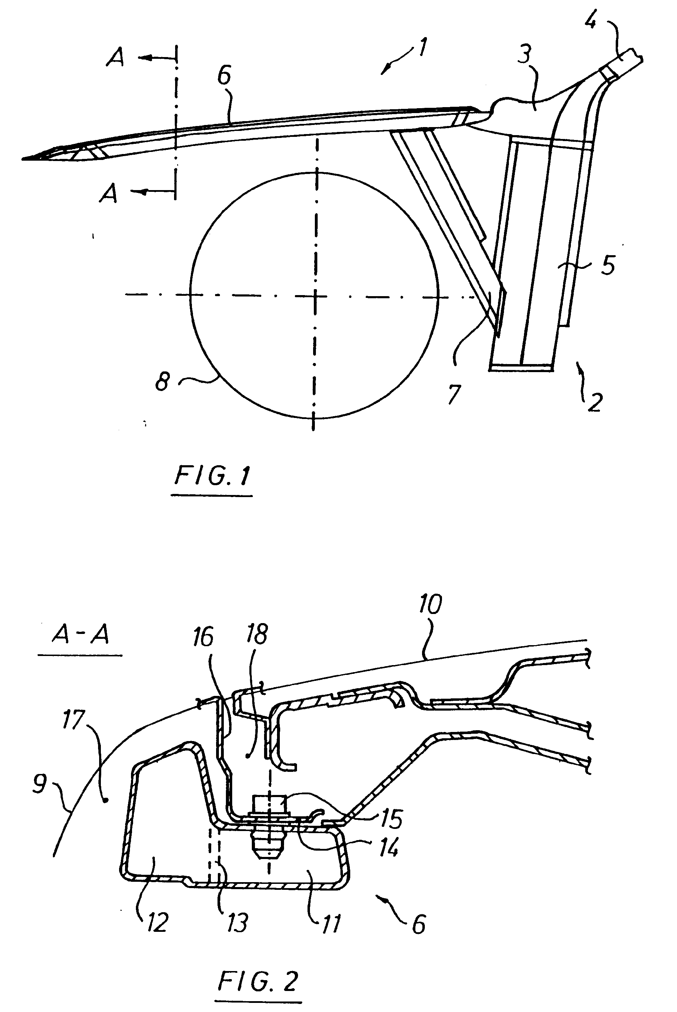

In Fig. 1 ist der vordere Bereich einer Tragstruktur der Fahrzeugkarosserie 1 eines Personenkraftwagens dargestellt, mit der Ausbildung im Bereich des Pfosten A und des Radhauses.

Die Tragstruktur besteht aus einem Knotenelement 3 zwischen einem vorderen Dachpfosten 4 und einem vorderen, etwa senkrecht stehenden Türpfosten 5.

Der Dachpfosten 4 und der Türpfosten 5 sind mit jeweils einem Ende mit dem Knotenelement 3 verbunden. Zudem sind mit dem Knotenelement 3 zwei weitere Träger verbunden, wovon ein (nicht sichtbarer) Querträger als Unterseite der Frontscheibe in die Zeichenebene hinein verläuft und ein Träger als Kotflügelbank 6 zur Fahrzeugfrontseite hinweist. Der Dachpfosten 4, der Türpfosten 5, der Querträger und die Kotflügelbank 6 sind Hohlprofile als Aluminium-Strangprofile. Das Knotenelement 3 ist ein Aluminium-Gußteil.

Damit weisen die Trägerteile einen geschlossenen, konstanten Querschnitt über die gesamte Länge auf. Insbesondere ist durch die Verwendung von Strangprofilen die Kotflügelbank 6 einteilig mit der vorhandenen Steifigkeit über die gesamte Länge ausgeführt, was sich positiv auf das Crashverhalten auswirkt, da dieser Träger dann von Anfang an Aufprallenergie aufnehmen kann. Durch die große Steifigkeit bestehen stabile Anbringungs- und Befestigungsmöglichkeiten für Nebenaggregate und Behälter, die am Profil auch als Randstege angeformt sein können.

Ein weiterer Träger ist als Radhausträger 7 jeweils in einem Abstand zum Knotenelement 3 zwischen der Kotflügelbank 6 und dem vorderen Türpfosten 5 angeordnet und dort mit seinen Endseiten durch Schweißung verbunden. Die Länge des Radhausträgers 7 und sein schräger Verlauf sind ersichtlich so dimensioniert, daß der maximal zur Verfügung stehende Raum zu einem Fahrzeugreifen 8 hin ausgenützt wird. Damit werden ein großes Stützdreieck und eine insgesamt stabile Anordnung erzielt.

In Fig. 2 ist ein Querschnitt durch die Kotflügelbank 6 dargestellt, an dem ein Kotflügel 9 bereits angeschraubt ist und wo die Lage einer Motorhaube 10 zu erkennen ist.

Die Kotflügelbank 6 hat einen L-förmigen Profilquerschnitt. Ein erster, unterer L-Schenkel besteht aus einem ersten, etwa waagrecht zur Fahrzeugmitte hin liegenden, rechteckigen Hohlkammerbereich 11. Ein zweiter L-Schenkel besteht aus einem zweiten, etwa senkrecht stehenden und zur Fahrzeugaußenseite hin liegenden, rechteckigen Hohlkammerbereich 12. Die beiden Hohlkammerbereiche 11 und 12 können ggfs. zur Erhöhung der Steifigkeit durch einen Steg 13 getrennt sein. Der Kotflügel 9 weist einen Randflansch 14 auf, mit dem er an der Oberseite des ersten Hohlkammerbereichs 11 anliegt und dort mit Schraubverbindungen 15 befestigt ist.

Anschließend an den Randflansch 14 ist der Kotflügel 9 mit einer etwa senkrechten Wand 16 nach oben gebogen und umgreift anschließend den zweiten Hohlkammerbereich 12. Damit ist der Bereich 17 unter dem Oberteil des Kotflügels 9 für einen großen und L-förmig strukturierten Querschnitt der Kotflügelbank 6 ausgenützt.

In dem durch die L-Form der Kotflügelbank 6 gebildeten Bereich 18 liegt die Motorhaube 10 mit ihrem Längsrand und entsprechend ihrer Stärke dergestalt, daß die Außenkontur des Kotflügels 9 und der Motorhaube 10 kontinuierlich ineinander übergehen.

## Patentansprüche

1. Personenwagenkarosserie
mit einer Tragstruktur aus Hohlprofilen, welche durch Knotenelemente miteinander verbunden sind und
die Hohlprofile als Leichtmetall-Strangprofile und die Knotenelemente als Leichtmetall-Gußteile ausgebildet sind,
wobei ein Knotenelement am Pfosten A zwischen einem vorderen Dachpfosten und einem vorderen Türpfosten angeordnet ist und den vorderen Dachpfosten und den vorderen Türpfosten sowie einen vorderen Querträger und eine zur Fahrzeugfrontseite weisende Kotflügelbank mit jeweils einem Ende aufnimmt und hält und
die Kotflügelbank ein Leichtmetall-Strangprofil ist,
dadurch gekennzeichnet,
daß die Kotflügelbank (6) zumindest in einem Teil des zur Fahrzeugaußenseite hin liegenden Profilquerschnitts der Querschnittsform eines damit verbundenen Kotflügels (9) angepaßt ist, dergestalt,
daß der Profilquerschnitt der Kotflügelbank (6) L-förmig ist, mit einem ersten, etwa waagrecht und zur Fahrzeugmitte hin liegenden, rechteckigen Hohlkammerbereich (11) als waagrechten L-Schenkel und mit einem zweiten, etwa senkrecht stehenden und zur Fahrzeugaußenseite hin liegenden, bzw. der Querschnittsform des Kotflügels (9) angepaßten, rechteckigen Hohlkammerbereich (12) als senkrechten L-Schenkel, so daß damit der Raum unterhalb des Kotflügels (9) für eine Querschnittsvergrößerung des Kotflügelbankprofils und somit einer Steifigkeitserhöhung genutzt wird,
daß weiter ein Radhausträger (7) als Leichtmetall-Strangprofil jeweils in einem Abstand zum Knotenelement (3) zwischen der Kotflügelbank (6) und dem vorderen Türpfosten (5) verläuft, wobei die Länge des Radhausträgers (7) und sein schräger Verlauf so dimensioniert sind, daß der maximal zur Verfügung stehende Raum zu einem Fahrzeugreifen (8) hin ausgenützt ist, um eine möglichst breite Basis für eine Abstützung zu erhalten,
daß der Radhausträger (7) mit seinen Endseiten mit der Kotflügelbank (6) und dem vorderen Türpfosten (5) fest verbunden ist, so daß ein stabiler, dreieckiger Trägerverbund als Stützdreieck gebildet ist, wobei die Kotflügelbank (6) nach unten zum vorderen Türpfosten abgestützt und bei einem Frontalaufprall eine günstige Krafteinleitung und Verteilung der Aufprallenergie erreicht wird.

2. Personenwagenkarosserie nach Anspruch 1, dadurch gekennzeichnet, daß der Kotflügel (9) mit einem Randflansch (14) an der Oberseite des ersten Hohlkammerbereichs (11) anliegt und dort mit Schrauben (15) verbunden ist,
daß der Kotflügel (9) anschließend an den Randflansch (14) mit seiner Querschnittskontur der Gestalt des zweiten Hohlkammerbereichs (12) folgt und
daß eine Motorhaube (10) mit ihrem Längsrand im L-Bereich (18) zwischen dem ersten (11) und zweiten Hohlkammerbereich (12) liegt.

3. Personenwagenkarosserie nach Anspruch 2, dadurch gekennzeichnet, daß die Kotflügelbank (6) als Mehrkammer-Hohlprofil ausgebildet ist, wobei die Hohlkammerbereiche (11, 12) durch Stege (13) getrennt sind.

4. Personenwagenkarosserie nach einem der Ansprüche 1 bis 3, dadurch gekennzeichnet, daß der Radhausträger (7) einen etwa quadratischen Querschnitt hat.

## Revendications

1. Carrosserie de voiture particulière,
comprenant une structure porteuse en profilés creux qui sont assemblés par des éléments de jonction,
les profilés creux étant réalisés sous forme de profilés filés en métal léger et les éléments de jonction sous forme de pièces en fonte de métal léger,
un élément de jonction étant disposé sur le pilier A entre un pilier avant de toit et un montant avant de porte, pour recevoir et maintenir, par une extrémité de chacun d'entre eux, le pilier avant de toit et le montant avant de porte, ainsi qu'une traverse avant et un support d'aile dirigé vers le côté avant de la voiture, et
le support d'aile étant un profilé filé en métal léger,
caractérisé en ce que
le support d'aile (6) est adapté, au moins dans une partie de la section du profilé située vers le côté extérieur de la voiture, à la forme en coupe transversale d'une aile (9) qui y est fixée, si bien que la section du profilé du support d'aile (6) est en forme de L avec, en tant que branche horizontale du L, une première région (11) constituant une chambre creuse rectangulaire, à peu près horizontale et dirigée vers le milieu de la voiture, et, en tant que hranche verticale du L, une seconde région (12) constituant une chambre creuse rectangulaire, à peu prés verticale, située vers le côté extérieur de la voiture et adaptée à la forme en coupe transversale de l'aile (9), ce qui fait que la place disponible au-dessous de l'aile (9) est ainsi utilisée pour un agrandissement de la section du profilé du support d'aile et, par suite, pour une augmentation de la rigidité,
un support (7) pour carter de roue, sous forme de profilé filé en métal léger, s'étend chaque fois, à distance de l'élément de jonction (3), entre le support d'aile (6) et le montant avant de porte (5), la longueur du support (7) du carter de roue et son inclinaison étant dimensionnées de telle sorte que la place maximale disponible, à côté d'un pneu (8) de la voiture, soit utilisée pour obtenir une base aussi large que possible pour un appui, et
le support (7) du carter de roue est fixé rigidement, par ses faces d'extrémité, au support d'aile (6) et au montant avant de porte (5), de sorte qu'il est formé, en tant que triangle d'appui, une poutre composite triangulaire stable, grâce à quoi le support d'aile (6) est étayé vers le bas sur le montant avant de porte et une canalisation favorable des efforts et une répartition de l'énergie d'impact sont obtenues en cas de collision frontale.

2. Carrosserie de voiture particulière selon la revendication 1, caractérisée en ce que l'aile (9) est appliquée, par une bride (14) de son bord, sur le côté supérieur de la première région (11) constituant une chambre creuse et y est fixée par des vis (15),
à la suite de la bride (14) de son bord, l'aile (9) suit, par le profil de sa section, la forme de la seconde région (12) constituant une chambre creuse, et
un capot (10) est placé, par son bord longitudinal, dans la région en L (18) entre la première (11) et la seconde (12) régions constituant des chambres creuses.

3. Carrosserie de voiture particulière selon la revendication 2, caractérisée en ce que le support d'aile (6) est réalisé sous forme de profilé creux à compartiments multiples, les régions (11, 12) constituant des compartiments creux étant séparées par des cloisons (13).

4. Carrosserie de voiture particulière selon l'une quelconque des revendications 1 à 3, caractérisée en ce que le support (7) du carter de roue a une section transversale à peu près carrée.

## Claims

1. Passenger car body shell
having a load-bearing structure consisting of hollow profiles which are interconnected by gusset elements and
the hollow profiles are extruded light-metal profiles and the gusset elements are light-metal castings,
there being arranged a gusset element at the A-post between a front roof post and a front door post, and said gusset element receiving and holding, in each case by one extremity, the front roof post and the front door post, as well as a front cross-member and a wing bar pointing to the front of the vehicle, and
the wing bar being an extruded light-metal profile,
characterised in that
the wing bar (6) is adapted in at least part of the profile cross-section located towards the vehicle exterior to the cross-sectional form of a wing (9) joined thereto, such that
the profile cross-section of the wing bar (6) is L-shaped, with a first, substantially horizontal, rectangular hollow compartment area (11) located towards the middle of the vehicle to form a horizontal L-leg and with a second, substantially upright rectangular hollow compartment area (12) located towards the vehicle exterior, or adapted to the cross-sectional form of the wing (9), to form a vertical L-leg, thereby utilising the space beneath the wing (9) to increase the cross-section of the wing bar profile and thus provide increased rigidity,
in addition that a wheel house beam (7) in the form of an extruded light-metal profile extends respectively at a distance from the gusset element (3) between the wing bar (6) and the front door post (5), the length of the wheel house beam (7) and its oblique course being dimensioned so as to utilise the maximum available space to a vehicle tyre (8), in order to obtain the broadest possible base for support, and
that the wheel house beam (7) is rigidly joined by its end faces to the wing bar (6) and to the front door post (5), thereby forming a stable triangular composite beam in the form of a triangular support, the wing bar (6) being supported downwards to the front door post and a favourable force initiation and impact energy distribution being achieved in the event of a frontal impact.

2. Passenger car body shell according to claim 1, characterised in that the wing (9) bears by an edge flange (14) against the top of the first hollow compartment area (11), where it is joined with screws (15),
that continuing from the edge flange (14) the wing (9) conforms in its cross-sectional contour to the shape of the second hollow compartment area (12), and
that an engine bonnet (10) is located with its longitudinal edge in the L-area (18) between the first (11) and second hollow compartment area (12).

3. Passenger car body shell according to claim 2, characterised in that the wing bar (6) is a multi-compartment hollow profile, with the hollow compartment areas (11, 12) separated by lands (13).

4. Passenger car body shell according to any of claims 1 to 3, characterised in that the wheel house beam (7) is substantially square in cross-section.
